# EUROPEAN PATENT APPLICATION

(11) **EP 2 081 370 A1**
(43) Date of publication of application: **22.07.2009**
(21) Application number: 08173102.8
(22) Date of filing: 30.12.2008
(51) Int. Cl.: H04M 1/60

(54) **Multi-standby mobile terminal and method of performing conference call using the same**

(30) Priority: 17.01.2008 KR 20080005296
(71) Applicant: Samsung Electronics Co., Ltd., Suwon-si Gyeonggi-do (KR)
(72) Inventor: Kim, Hyung Chan Samsung Electronics Co., Ltd, Gyeonggi-do (KR)
(74) Representative: Harrison Goddard Foote

(57) **Abstract**

A multi-standby mobile terminal and a method for performing a conference call using the same are provided. The method of performing a conference call includes connecting a first mobile terminal existing in a first wireless communication network and a second mobile terminal, wherein the second mobile terminal is a multi-standby mobile terminal, requesting communication to the second mobile terminal, by a third mobile terminal existing in a second wireless communication network, and performing a conference call by synthesizing sound signals, input from the first mobile terminal and the second mobile terminal, to a synthesized sound signal in a first audio mixer of the second mobile terminal, when the communication request is a request for a conference call, and transmitting the synthesized sound signal to the third mobile terminal.

## Description

### BACKGROUND OF THE INVENTION

### 1. Field of the Invention:

The present invention relates to a multi-standby mobile terminal and a method of performing a conference call using the same. More particularly, the present invention relates to a multi-standby mobile terminal and a method of performing a conference call using the same that enable a communication connection between several mobile terminals existing in different wireless communication networks.

### 2. Description of the Related Art:

Due to rapid technology development, mobile terminals having various functions, such as voice communication, short message service, audiovisual communication, an electronic scheduler and Internet, are now available. A multi-standby mobile terminal that can perform a communication connection with two or more wireless communication networks, such as a dual-standby mobile terminal that supports a Code Division Multiple Access (CDMA) wireless communication network and a Global System for Mobile communication (GSM) wireless communication network, is now provided. The dual-standby mobile terminal may be in a communication standby state in both a CDMA wireless communication network service area and a GSM wireless communication network service area. That is, in a state where the dual-standby mobile terminal is connected for communication with a mobile terminal using a CDMA wireless communication network, the dual-standby mobile terminal can receive a communication request from a mobile terminal using a GSM wireless communication network and be connected with the mobile terminal for communication.

A mobile terminal service provider provides, as an additional service, a conference call function in which several persons can simultaneously form a communication channel and perform a phone conference.

A conventional multi-standby mobile terminal cannot perform a conference call. However, the conventional multi-standby mobile terminal can only perform simultaneous standby and individual communication with mobile terminals using different wireless communication networks.

Therefore, a need exists for a method and apparatus that enable a multi-standby mobile terminal to perform a conference call using different wireless communication networks.

### SUMMARY OF THE INVENTION

An aspect of the present invention is to address at least the above-mentioned problems and/or disadvantages and to provide at least the advantages described below. Accordingly, an aspect of the present invention is to provide a multi-standby mobile terminal and a method for performing a conference call using the same that enable mobile terminals in different wireless communication networks to perform a conference call.

In accordance with an aspect of the present invention, a multi-standby mobile terminal is provided. The mobile terminal includes a first communication module for forming a communication channel with a first wireless communication network, a second communication module for forming a communication channel with a second wireless communication network, and a first audio mixer for synthesizing sound signals, input from the first communication module and a microphone, to a synthesized sound signal, and outputting the synthesized sound signal to the second communication module.

In accordance with another aspect of the present invention, a method of performing a conference call is provided. The method includes connecting a first mobile terminal existing in a first wireless communication network and a second mobile terminal, wherein the second mobile terminal is a multi-standby mobile terminal; requesting communication to the second mobile terminal, by a third mobile terminal existing in a second wireless communication network; and performing a conference call by synthesizing sound signals, input from the first mobile terminal and the second mobile terminal, to a synthesized sound signal in a first audio mixer of the second mobile terminal, when the communication request is a request for a conference call, and transmitting the synthesized sound signal to the third mobile terminal.

Other aspects, disadvantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a diagram illustrating a conference call system using a multi-standby mobile terminal according to an exemplary embodiment of the present invention;

FIG. 2 is a block diagram illustrating a configuration of the multi-standby mobile terminal according to an exemplary embodiment of the present invention; and

FIG. 3 is a flowchart illustrating a method for performing a conference call according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, a dual-standby mobile terminal that can perform a communication connection with a CDMA wireless communication network and a GSM wireless communication network, such as a multi-standby mobile terminal, are described. However, the present invention is not limited thereto. That is, a multi-standby mobile terminal according to exemplary embodiments of the present invention may perform a communication connection with various wireless communication networks, such as a General Packet Radio Service (GPRS), an Enhanced Data GSM Environment (EDGE), a Universal Mobile Telecommunications System (UMTS) and a Wideband Code Division Multiple Access (WCDMA).

A configuration of a multi-standby mobile terminal according to an exemplary embodiment of the present invention and a method of performing a conference call using the multi-standby mobile terminal are described with reference to the accompanying drawings.

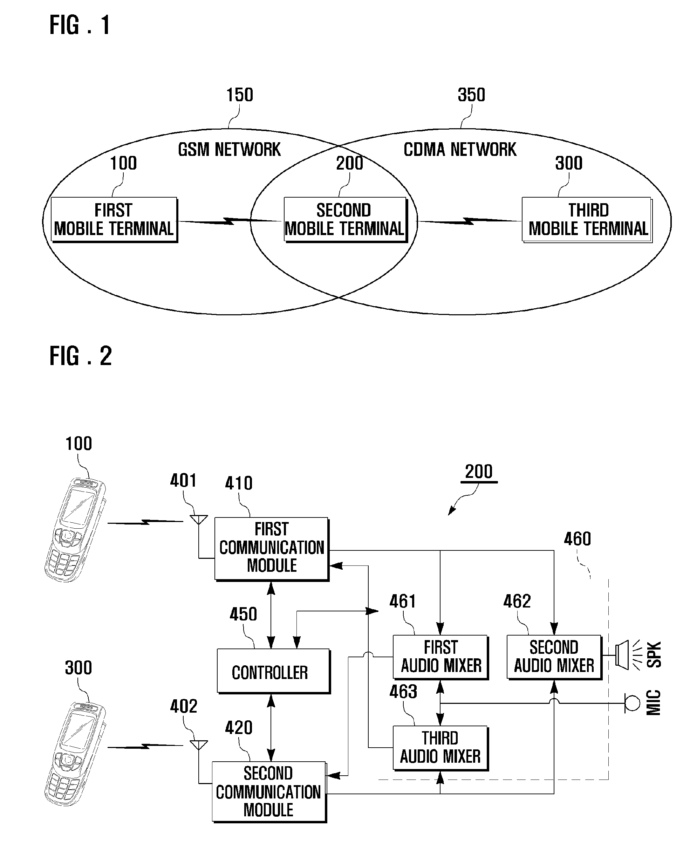

FIG. 1 is a diagram illustrating a conference call system using a multi-standby mobile terminal according to an exemplary embodiment of the present invention.

Referring to FIG. 1, a first mobile terminal 100 is a mobile terminal for supporting a GSM wireless communication network 150, a third mobile terminal 300 is a mobile terminal for supporting a CDMA wireless communication network 350 and a second mobile terminal 200 is a multi-standby mobile terminal for supporting both the GSM and CDMA wireless communication networks 150 and 350. The first mobile terminal 100 and the third mobile terminal 300 may also be a multi-standby mobile terminal.

In the following description, in a state where the first mobile terminal 100 and the second mobile terminal 200 are connected for communication, if the third mobile terminal 300 requests communication between several persons, it is assumed that the second mobile terminal 200 may perform a conference call function. That is, in a state where the second mobile terminal 200 and the first mobile terminal 100 are connected for communication using the GSM wireless communication network 150, the third mobile terminal 300 may request, through the CDMA wireless communication network 350, communication between several persons to the second mobile terminal 200. Alternatively, the second mobile terminal 200 may request communication between several persons to the third mobile terminal 300. In this case, a conference call function of the second mobile terminal 200 is activated. Thus, communication between the first mobile terminal 100, the second mobile terminal 200 and the third mobile terminal 300 may be performed.

A conference call function of the second mobile terminal 200 is described later with reference to FIG. 2.

When a conference call function is activated, if a sound signal of the first mobile terminal 100 is transmitted to the second mobile terminal 200, the second mobile terminal 200 synthesizes its own sound signal and a sound signal of the first mobile terminal 100 using an audio mixer and transmits the synthesized sound signal to the third mobile terminal 300. That is, the third mobile terminal 300 may receive sound signals of the second mobile terminal 200 and the first mobile terminal 100 through the synthesized sound signal.

Similarly, if a sound signal of the third mobile terminal 300 is transmitted to the second mobile terminal 200, the second mobile terminal 200 may synthesize its own sound signal and a sound signal of the third mobile terminal 300 using an audio mixer. The second mobile terminal 200 then transmits the synthesized sound signal to the first mobile terminal 100. That is, the first mobile terminal 100 may receive sound signals of the second mobile terminal 200 and the third mobile terminal 300 through the synthesized sound signal.

The second mobile terminal 200 synthesizes a sound signal transmitted from the first mobile terminal 100 and a sound signal transmitted from the third mobile terminal 300 using the audio mixer and outputs the synthesized sound signal through a speaker (SPK) of the second mobile terminal 200. Thereby, the first mobile terminal 100 may receive sound signals of the second mobile terminal 200 and the third mobile terminal 300, the second mobile terminal 200 may receive sound signals of the first mobile terminal 100 and the third mobile terminal 300, and the third mobile terminal 300 may receive sound signals of the first mobile terminal 100 and the second mobile terminal 200. Thus, a conference call may be performed.

FIG. 2 is a block diagram illustrating a configuration of the multi-standby mobile terminal according to an exemplary embodiment of the present invention.

FIG. 2 illustrates, as the multi-standby mobile terminal 200 according to an exemplary embodiment of the present invention, a dual-standby mobile terminal that may perform a communication connection with the GSM wireless communication network and the CDMA wireless communication network. However, the multi-standby mobile terminal of the present invention is not limited to the dual-standby mobile terminal.

The dual-standby mobile terminal may have slots in which a CDMA card and a GSM card are mounted or one slot for mounting a dual card in which a CDMA card and a GSM card are integrated.

Referring to FIG. 2, a dual-standby mobile terminal (hereinafter, the second mobile terminal 200) according to an exemplary embodiment of the present invention includes a first antenna 401, a second antenna 402, a first communication module 410, a second communication module 420, a controller 450 and an audio mixer 460 including a first audio mixer 461, a second audio mixer 462 and a third audio mixer 463.

The first antenna 401 transmits and receives a sound signal and data through the GSM wireless communication network 150 and receives a frequency to be used for the GSM wireless communication network 150.

The second antenna 402 transmits and receives a sound signal and data through the CDMA wireless communication network 350 and receives a frequency to be used for the CDMA wireless communication network 350.

FIG. 2 illustrates the first antenna 401 and the second antenna 402 as separate antennas. However the first antenna 401 and the second antenna 402 may be formed as one antenna. When the first antenna 401 and the second antenna 402 are formed as one antenna, the dual-standby mobile terminal 200 includes a means for dividing a frequency band into a CDMA frequency band and a GSM frequency band. For example, the dual-standby mobile terminal 200 divides a signal received by the antenna using a duplexer (not shown) into signals of a CDMA frequency band and signals of a GSM frequency band. The dual-standby mobile terminal 200 transmits the signal of the GSM frequency band to the first communication module 410 and the signal of the CDMA frequency band to the second communication module 420.

The first communication module 410 and the second communication module 420 each include a transmission/reception signal divider (not shown) for dividing a transmission/reception signal, a Radio Frequency (RF) transmitter (not shown) for up-converting a frequency of a signal to be transmitted and amplifying the signal, an RF receiver (not shown) for low-noise amplifying a received signal and down-converting a frequency of the signal and a modem for modulating and demodulating a sound signal.

Hereinafter, for convenience of description, it is assumed that the first communication module 410 forms a communication channel with the GSM wireless communication network 150 and transmits and receives a wireless signal to and from the first mobile terminal 100 using a GSM wireless communication method. Also, the second communication module 420 forms a communication channel with the CDMA wireless communication network 350 and transmits and receives a wireless signal to and from the third mobile terminal 300 using a CDMA wireless communication method.

The first communication module 410 demodulates a wireless signal received from the first mobile terminal 100 and modulates a sound signal input from a microphone (MIC) of the second mobile terminal 200 to a wireless signal. More particularly, when performing a conference call, the first communication module 410 modulates a sound signal of the second mobile terminal 200 and a sound signal of the third mobile terminal 300 synthesized in the audio mixer 460 and transmits the modulated sound signal to the first mobile terminal 100.

The second communication module 420 demodulates a wireless signal received from the third mobile terminal 300 and modulates a sound signal input from the MIC of the second mobile terminal 200 to a wireless signal. More particularly, when performing a conference call, the second communication module 420 modulates a sound signal of the second mobile terminal 200 and a sound signal of the first mobile terminal 100 synthesized in the audio mixer 460 and transmits the modulated sound signal to the third mobile terminal 300.

The controller 450 controls general operations of the second mobile terminal 200 and a signal flow of elements of the second mobile terminal 200. More particularly, the controller 450 controls the first communication module 410 and the second communication module 420. In more detail, the controller 450 controls the first communication module 410 and the second communication module 420 to perform a communication connection with the GSM communication network 150 and CDMA communication network 350, respectively. When a communication connection request is received by the first communication module 410 or the second communication module 420, the controller 450 activates the corresponding first communication module 410 or second communication module 420 to perform communication.

Further, in a state where the first mobile terminal 100 and the second mobile terminal 200 perform communication through the GSM wireless communication network 150, if the third mobile terminal 300 requests communication between several persons through the CDMA wireless communication network 350, the controller 450 of the second mobile terminal 200 performs a conference call function. If a communication request received from the third mobile terminal 300 is not a request for communication between several persons, the controller 450 performs an individual communication function. That is, in order to perform individual communication with the third mobile terminal 300, the controller 450 terminates functions other than a communication connection function of the first communication module 410. Further, the controller 450 controls the audio mixer 460 to block transmission and reception of a sound signal to and from the first mobile terminal 100.

Similarly, in order to perform individual communication with the first mobile terminal 100, the controller 450 terminates functions other than a communication connection function of the second communication module 420, and blocks transmission and reception of a sound signal to and from the third mobile terminal 300.

The controller 450 may perform a conference call function for activating both the first communication module 410 and the second communication module 420. Specifically, when the controller 450 activates both the first communication module 410 and the second communication module 420, a sound signal of the first mobile terminal 100 is modulated in the second mobile terminal 200, the modulated sound signal is synthesized with a sound signal of the second mobile terminal 200 in the audio mixer 460 and the synthesized signal is transmitted to the third mobile terminal 300. Likewise, a sound signal of the third mobile terminal 300 is synthesized with a sound signal of the second mobile terminal 200 in the audio mixer 460 and the synthesized signal is transmitted to the first mobile terminal 100. Thereby, a conference call for voice communication between mobile terminals in different wireless communication networks is performed.

When the first mobile terminal 100 and the second mobile terminal 200 perform individual communication, the controller 450 activates only the second audio mixer 462 and the third audio mixer 463. When the second mobile terminal 200 and the third mobile terminal 300 perform individual communication, the controller 450 activates only the first audio mixer 461 and the second audio mixer 462. When performing a conference call, the controller 450 activates the first audio mixer 461, second audio mixer 462 and third audio mixer 463.

While performing a conference call, when communication with either the first mobile terminal 100 or the third mobile terminal 300 terminates, the controller 450 controls a conference call termination function of the audio mixer 460. A detailed description thereof is described later.

The controller 450 may be included in the first communication module 410 or in the second communication module 420. In this case, the communication module 410 or 420 including the controller 450 becomes a main communication module and controls signal flows of the entire system, including the signal flows of another communication module.

When performing a conference call, the first audio mixer 461 synthesizes a sound signal of the first mobile terminal 100 received from the first communication module 410 and a sound signal received from the MIC of the second mobile terminal 200. The first audio mixer 461 outputs the synthesized sound signal to the second communication module 420. The synthesized sound signal output to the second communication module 420 is modulated and transmitted to the third mobile terminal 300 via the second antenna 402. That is, when performing a conference call, a sound signal of the first mobile terminal 100 is input to the first audio mixer 461, via the first communication module 410 of the second mobile terminal 200, and synthesized by the first audio mixer 461 together with a signal input from the MIC of the second mobile terminal 200. The synthesized sound signal is input to the second communication module 420 of the second mobile terminal 200 and transmitted to the third mobile terminal 300 through the second antenna 402.

While performing a conference call, when communication with the third mobile terminal 300 terminates, the first audio mixer 461 terminates a conference call function. In an exemplary implementation, in order to prevent unnecessary power consumption, the first audio mixer 461 is activated only when performing communication with the third mobile terminal 300.

The second audio mixer 462 synthesizes a sound signal of the first mobile terminal 100 output from the first communication module 410 and a sound signal of the third mobile terminal 300 output from the second communication module 420. The synthesized sound signal is output through a speaker (SPK) of the second mobile terminal 200. The SPK may be mounted on the mobile terminal or may be an earphone of the mobile terminal or a separate audio speaker receiving the synthesized sound signal.

The third audio mixer 463 synthesizes a sound signal of the third mobile terminal 300 received from the second communication module 420 and a sound signal received from the MIC of the second mobile terminal 200. The third audio mixer 463 outputs the synthesized sound signal to the first communication module 410. The synthesized sound signal output to the first communication module 410 is modulated and transmitted to the first mobile terminal 100, via the first antenna 401. That is, when performing a conference call, a sound signal of the third mobile terminal 300 is input to the third audio mixer 463 via the second communication module 420 of the second mobile terminal 200 and synthesized by the third audio mixer 463 together with a signal input from the MIC of the second mobile terminal 200. The synthesized sound signal is input to the first communication module 410 of the second mobile terminal 200 and transmitted to the first mobile terminal 100 from the first antenna 401.

While performing a conference call, when communication with the first mobile terminal 100 terminates, the third audio mixer 463 terminates a conference call function. In an exemplary implementation, in order to prevent unnecessary power consumption, the third audio mixer 463 is activated only when performing communication with the first mobile terminal 100.

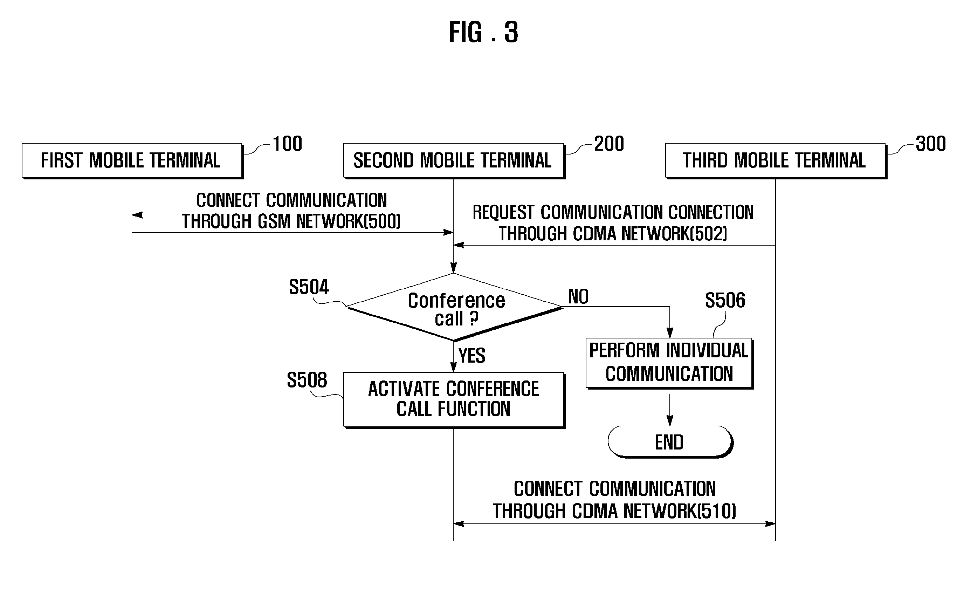

FIG. 3 is a flowchart illustrating a method of performing a conference call according to an exemplary embodiment of the present invention.

Referring to FIGs. 1 to 3, the first mobile terminal 100 and the second mobile terminal 200 are connected for communication through the GSM wireless communication network 150 in step S500. In this case, the second mobile terminal 200 transmits and receives a wireless signal to and from the first mobile terminal 100 from the first antenna 401 and the first communication module 410.

The controller 450 of the second mobile terminal 200 controls the second communication module 420 to await a communication connection request. Further, when forming a communication channel with the first mobile terminal 100, the controller 450 of the second mobile terminal 200 activates the second audio mixer 462 and the third audio mixer 463 and sustains the first audio mixer 461 in an inactive state. Specifically, when the first mobile terminal 100 and the second mobile terminal 200 perform individual communication, the controller 450 of the second mobile terminal 200 activates only the second audio mixer 462 and the third audio mixer 463. When the second mobile terminal 200 and the third mobile terminal 300 perform individual communication, the controller 450 of the second mobile terminal 200 activates only the first audio mixer 461 and the second audio mixer 462. When performing a conference call, the controller 450 of the second mobile terminal 200 activates the first audio mixer 461, second audio mixer 462 and third audio mixer 463.

The third mobile terminal 300 requests communication to the second mobile terminal 200 through the CDMA wireless communication network 350 in step S502. Although not shown in FIG. 3, alternatively the second mobile terminal 200 may request communication to the third mobile terminal 300 through the CDMA wireless communication network 350.

When a communication request from the third mobile terminal 300 is received, the controller 450 of the second mobile terminal 200 notifies the reception of a communication request to a user of the second mobile terminal 200, by controlling a display unit to display that a communication connection request from another wireless communication network is received or by outputting a reception sound, for example.

The second mobile terminal 200 determines whether a conference call is to be performed according to the communication request received from the CDMA wireless communication network 350 in step S504.

If a conference call is not to be performed, the second mobile terminal 200 performs individual communication with either the first mobile terminal 100 or the third mobile terminal 300, according to the user's selection in step S506. The individual communication is performed by controlling the first communication module 410 and the second communication module 420. For example, when individual communication with the first mobile terminal 100 is intended, the controller 450 of the second mobile terminal 200 controls to sustain only a communication connection state of the second communication module 420 and to turn off other functions.

If it is determined that a conference call is to be performed in step S504, the second mobile terminal 200 activates a conference call function in step S508. The controller 450 activates both the first communication module 410 and the second communication module 420 of the second mobile terminal 200, and activates the first audio mixer 461, second audio mixer 462 and third audio mixer 463.

The second mobile terminal 200 is connected for communication with the third mobile terminal 300 in the CDMA wireless communication network 350 in step S510, thereby forming a conference call with the first mobile terminal 100 and the third mobile terminal 300.

When forming a conference call between the first mobile terminal 100 and the third mobile terminal 300, the first audio mixer 461 of the second mobile terminal 200 synthesizes a sound signal of the first mobile terminal 100 and a sound signal of the second mobile terminal 200 and outputs the synthesized sound signal to the second communication module 420. The output sound signal of the first mobile terminal 100 and the output sound signal of the second mobile terminal 200 are transmitted as the synthesized sound signal to the third mobile terminal 100 from the second antenna 402.

The third audio mixer 463 of the second mobile terminal 200 synthesizes a sound signal of the third mobile terminal 300 and a sound signal of the second mobile terminal 200 and outputs the synthesized sound signal to the first communication module 410. The output sound signal of the third mobile terminal 300 and the output sound signal of the second mobile terminal 200 are transmitted as the synthesized sound signal to the first mobile terminal 100 from the first antenna 401.

The second audio mixer 462 of the second mobile terminal 200 synthesizes a sound signal of the third mobile terminal 300 and a sound signal of the first mobile terminal 100. The second audio mixer 462 outputs the synthesized sound signal through the SPK of the second mobile terminal 200.

While performing a conference call, when communication between the first mobile terminal 100 and the second mobile terminal 200 terminates, the controller 450 of the second mobile terminal 200 terminates functions of the third audio mixer 463 in order to prevent unnecessary power consumption. Alternatively, when communication between the second mobile terminal 200 and the third mobile terminal 300terminates, the controller 450 of the second mobile terminal 200 terminates functions of the first audio mixer 461 in order to prevent unnecessary power consumption.

As described above, a multi-standby mobile terminal according to exemplary embodiments of the present invention may perform a conference call with mobile terminals using different wireless communication networks. Thus, a conference call may be performed without subscribing to an additional service. Accordingly, user convenience may be improved.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A multi-standby mobile terminal comprising:
a first communication module (410) for forming a communication channel with a first wireless communication network;
a second communication module (420) for forming a communication channel with a second wireless communication network; and
a first audio mixer (461) for synthesizing sound signals, input from the first communication module (410) and a microphone, to a synthesized sound signal, and for outputting the synthesized sound signal to the second communication module (420).

2. The multi-standby mobile terminal of claim 1, further comprising a second audio mixer (462) for synthesizing sound signals, input from the first communication module (410) and the second communication module (420), to a synthesized sound signal, and outputting the synthesized sound signal to a speaker.

3. The multi-standby mobile terminal of claim 2, further comprising a third audio mixer (463) for synthesizing sound signals, input from the second communication module (420) and the microphone, to a synthesized sound signal, and outputting the synthesized sound signal to the first communication module (410).

4. The multi-standby mobile terminal of claim 3, further comprising a controller (450) for terminating a function of the first audio mixer (461), if communication through the second communication module (420) terminates.

5. The multi-standby mobile terminal of claim 4, wherein the controller (450) terminates a function of the third audio mixer (463), if communication through the first communication module (410) terminates.

6. A method for performing a conference call, the method comprising:
connecting a first mobile terminal existing in a first wireless communication network and a second mobile terminal, wherein the second mobile terminal comprises a multi-standby mobile terminal (S500);
requesting communication to the second mobile terminal (S502), by a third mobile terminal existing in a second wireless communication network; and
performing a conference call by synthesizing sound signals, input from the first mobile terminal and the second mobile terminal, to a synthesized sound signal in a first audio mixer of the second mobile terminal, when the communication request is a request for a conference call (S508), and transmitting the synthesized sound signal to the third mobile terminal.

7. The method of claim 6, wherein the performing of the conference call further comprises terminating a function of the third audio mixer, if communication between the first mobile terminal and the second mobile terminal terminates.

8. The method of claim 6, wherein the performing of the conference call further comprises synthesizing sound signals input from the first mobile terminal and the third mobile terminal, to a synthesized sound signal in a second audio mixer of the second mobile terminal and outputting the synthesized sound signal to a speaker of the second mobile terminal.

9. The method of claim 8, wherein the performing of the conference call comprises synthesizing sound signals input from the second mobile terminal and the third mobile terminal, to a synthesized sound signal in a third audio mixer of the second mobile terminal and transmitting the synthesized sound signal to the first mobile terminal.

10. The method of claims 8 or 9, wherein the performing of the conference call further comprises terminating a function of the first audio mixer, if communication between the second mobile terminal and the third mobile terminal terminates.
